# FASCICULE DE BREVET EUROPEEN

(11) **EP 1 555 466 B1**
(45) Date de publication et mention de la délivrance du brevet: **09.07.2008**
(21) Numéro de dépôt: 04029041.3
(22) Date de dépôt: 08.12.2004
(51) Int. Cl.: F16J 15/08

(54) **Procédé d'obtention d'une surépaisseur sur une tôle et joint d'étanchéité incorporant ladite tôle**
Verfahren zum Verdicken eines Blechs, sowie aus einem solchen Blech bestehende Flachdichtung
Method for thickening a metal sheet and sealing gasket comprising such a metal sheet

(30) Priorité: 13.01.2004 FR 0450071
(43) Date de publication de la demande: 20.07.2005
(73) Titulaire: Carl Freudenberg KG, 69469 Weinheim (DE)
(72) Inventeur: Burg, Jean Pascal, 87150 Saint-Gence (FR)

(56) Documents cités:
- EP-A- 0 702 174
- EP-A- 1 231 415
- FR-A- 2 681 378
- PATENT ABSTRACTS OF JAPAN vol. 2002, no. 02, 2 avril 2002 (2002-04-02) -& JP 2001 295933 A (TAIHO KOGYO CO LTD), 26 octobre 2001 (2001-10-26)

## Description

La présente invention se rapporte à un procédé d'obtention d'une surépaisseur sur une tôle selon le préambule de la revendication 1, ainsi qu'à un joint de culasse, incorporant ladite tôle.

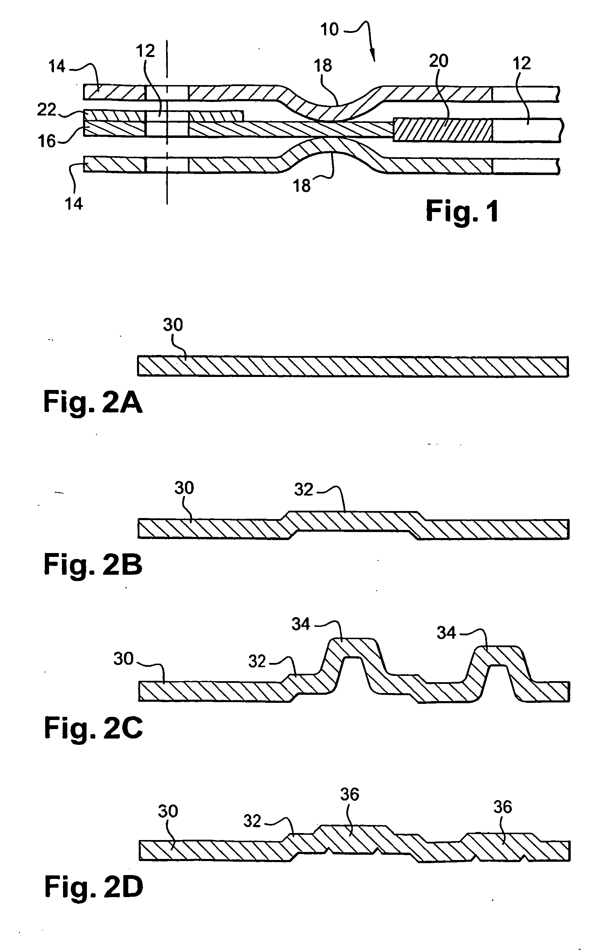

Sur la figure 1, on a représenté un joint de culasse 10 utilisé pour assurer l'étanchéité entre un bloc moteur et une culasse. Un joint de culasse a généralement la forme du bloc moteur, notamment rectangulaire, et comprend une pluralité d'ouvertures 12, permettant d'assurer la continuité entre des cavités ou des conduits disposés d'une part dans le bloc moteur, et d'autre part dans la culasse. Le joint de culasse doit assurer une bonne étanchéité entre les conduits entre eux et entre les conduits et l'extérieur malgré les défauts géométriques des surfaces en contact du bloc moteur et de la culasse et les variations de température.

Un joint de culasse 10 comprend généralement plusieurs feuilles ou tôles empilées, notamment deux tôles extérieures actives 14 entre lesquelles est disposée une tôle intercalaire 16. Au moins l'une des tôles extérieures comporte une nervure 18 autour des ouvertures susceptibles de coïncider avec les chambres de combustion, à proximité desdites ouvertures, orientée vers l'intérieur du joint, afin d'obtenir une zone déformable permettant de compenser les déformations du joint. Ainsi, lorsque des nervures 18 sont prévues sur les deux tôles extérieures 14, les parties en saillie desdites nervures 18 sont disposées en vis à vis et orientées l'une vers l'autre ou en opposition.

Pour améliorer l'étanchéité, la tôle intercalaire comprend généralement des zones de surépaisseur, notamment autour des ouvertures susceptibles de coïncider avec les chambres de combustion et/ou en périphérie.

Selon une première solution, illustrée par la figure 1, les zones de surépaisseur sont obtenues grâce à l'ajout d'éléments, notamment une cale 20, appelée stoppeur, en périphérie des ouvertures prévues pour les chambres de combustion, disposée bout à bout avec la tôle intercalaire 16 et d'épaisseur supérieure à ladite tôle 16 ou un clinquant 22 rapporté sur une partie de la surface de la tôle intercalaire 16.

Cette solution par ajout d'éléments n'est pas satisfaisante car elle nécessite une procédure délicate pour la mise en place et la fixation desdits éléments rapportés.

Une autre solution consiste à obtenir les zones de surépaisseur par matriçage c'est-à-dire en déformant la tôle intercalaire de manière à faire fluer la matière depuis des zones de moindre épaisseur vers les zones de surépaisseur. Le document JP-2001295933 décrit une tôle comprenant une surépaisseur obtenue par matriçage. Même si cette solution permet d'éviter l'ajout d'éléments, elle ne donne pas satisfaction car elle nécessite un outillage complexe, notamment des presses de fortes puissances pour obtenir l'énergie nécessaire au fluage de la matière.

Aussi, la présente invention vise à pallier les inconvénients de l'art antérieur en proposant un nouveau procédé d'obtention d'une surépaisseur sur une tôle susceptible d'être intégrée dans un joint, notamment un joint de culasse.

A cet effet, l'invention a pour objet un procédé d'obtention d'une surépaisseur au niveau de la face d'une tôle susceptible d'être incorporée dans un joint, caractérisé en ce qu'il consiste à réaliser une opération de nervurage consistant à déformer ladite tôle afin de former au moins une nervure et une opération de calibrage consistant à aplatir ladite nervure de manière à former une zone de surépaisseur.

Cette technique permet d'obtenir une zone de surépaisseur sans ajout d'un élément rapporté et ne nécessite pas un outillage de fortes puissances.

Un joint de culasse selon l'invention est défini dans les revendications 6 et 7.

D'autres caractéristiques et avantages ressortiront de la description qui va suivre de l'invention, description donnée à titre d'exemple uniquement, en regard des dessins annexés sur lesquels:
- la figure 1 est une coupe d'un joint de culasse selon l'art antérieur,
- les figures 2A à 2D sont un synoptique illustrant le procédé de l'invention,
- la figure 3 est une coupe d'un joint de culasse incorporant une tôle avec au moins une surépaisseur obtenue à partir du procédé de l'invention,
- la figure 4 est une vue de dessus d'un joint de culasse, et
- Ici figure 5 est un tableau illustrant un nombre non exhaustif de variantes de réalisation d'un joint incorporant au moins une tôle avec au moins une surépaisseur obtenue à partir du procédé de l'invention.

Sur la figure 2A, on a représenté une tôle 30, de préférence métallique.

Selon une première étape facultative, la tôle 30 est soumise à une opération d'estampage consistant à déformer de manière plastique ladite tôle entre deux matrices. Cette opération facultative d'estampage permet d'obtenir un déport vertical 32. Elle n'est pas plus détaillée car elle est à la portée de l'homme de l'art et n'est pas l'élément essentiel de l'invention.

Selon une caractéristique importante de l'invention, la tôle 30 subit une opération de nervurage consistant à déformer ladite tôle 30 afin de former au moins une nervure 34 et une opération de calibrage consistant à aplatir ladite partie nervurée de manière à obtenir une zone de surépaisseur 36 avec une hauteur précise de manière à améliorer la répartition des pressions de contact et de la sorte l'étanchéité. Par aplatir, on entend une déformation de la nervure de manière à réduire sa hauteur.

Avantageusement, la nervure 34 est calibrée avec un effort tel que la zone de surépaisseur forme une butée franche, c'est à dire sensiblement non déformable, susceptible de résister aux contraintes qu'elle supportera dans son application. Selon un mode de réalisation, la nervure est calibrée avec un effort supérieur ou égal à ceux qu'elle va supporter dans son application, et de préférence avec un effort correspondant à ceux qu'elle va supporter dans son application avec une marge de sécurité.

Même si dans certain cas, la nervure est complètement aplatie, elle ne revient pas à l'état initial tel qu'illustré par la figure 2A mais conserve toujours au niveau de la nervure 34 une zone de surépaisseur 36.

L'opération de nervurage est réalisée selon un parcours correspondant à la localisation de la ou des future(s) zone(s) de surépaisseur, la ou les nervures pouvant être continue(s) ou discontinue(s). Cette opération peut se faire avec un outil dont le poinçon pourra présenter une hauteur et une largeur variable selon la localisation. Il pourra en être de même de la matrice correspondante.

L'opération de calibrage peut être obtenue par planage et la hauteur de la surépaisseur obtenue peut varier d'un point à un autre, notamment pour former un stoppeur dit 3D.

Selon une autre caractéristique de l'invention, la tôle subit une opération de laminage durant la phase de nervurage, l'épaisseur de la tôle étant inférieure au jeu prévu entre la matrice et le poinçon. Au moment du nervurage, la matière est étirée et déformée dans le domaine plastique au niveau des flancs de la nervure. Ainsi, après l'opération de calibrage, on obtient une zone de surépaisseur formant une butée franche, c'est-à-dire sensiblement non déformable, susceptible de résister aux contraintes qu'elle supportera dans son application, notamment les efforts de compression.

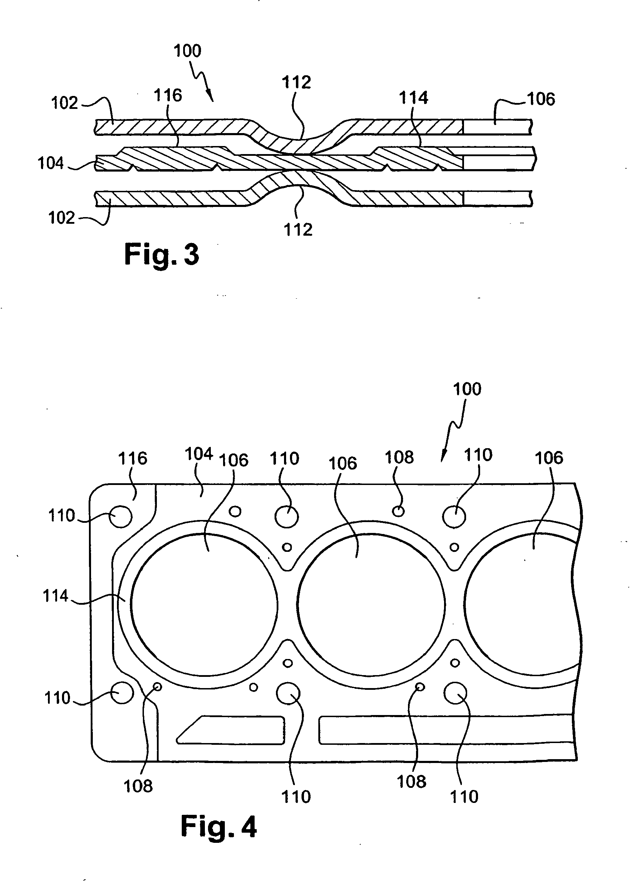

Sur les figures 3 et 4, on représenté un joint de culasse 100 incorporant au moins une tôle avec au moins une zone de surépaisseur obtenue à partir du procédé de l'invention.

De manière connue, le joint de culasse 100 comprend plusieurs feuilles ou tôles empilées, notamment deux tôles extérieures actives 102 entre lesquelles est disposée une tôle intercalaire 104 et une pluralité d'ouvertures, notamment au moins une ouverture 106 susceptible de coïncider avec une chambre de combustion, des passages de fluide 108 et des passages de vis 110 pour des moyens de fixation. Au moins l'une des tôles extérieures 102 comporte une nervure 112 autour des ouvertures susceptibles de coïncider avec les chambres de combustion, à proximité desdites ouvertures, orientée vers l'interieur du joint, afin d'obtenir une zone déformable permettant de compenser les déformations du joint. Ainsi, lorsque des nervures 112 sont prévues sur les deux tôles extérieures 102, les parties en saillie desdites nervures 112 sont disposées en vis à vis et orientées l'une vers l'autre ou en opposition.

La tôle intercalaire 104 comprend au moins une zone de surépaisseur obtenue à partir du procédé de l'invention. Avantageusement, la tôle intercalaire 104 comprend une première zone de surépaisseur 114 autour d'au moins une ouverture 106 susceptible de cdincider avec une chambre de combustion 106 et/ou une seconde zone de surépaisseur 116 en périphérie de la tôle intercalaire. La tôle intercalaire 104 peut comprendre des surépaisseurs autour des ouvertures 106, 108 et 110.

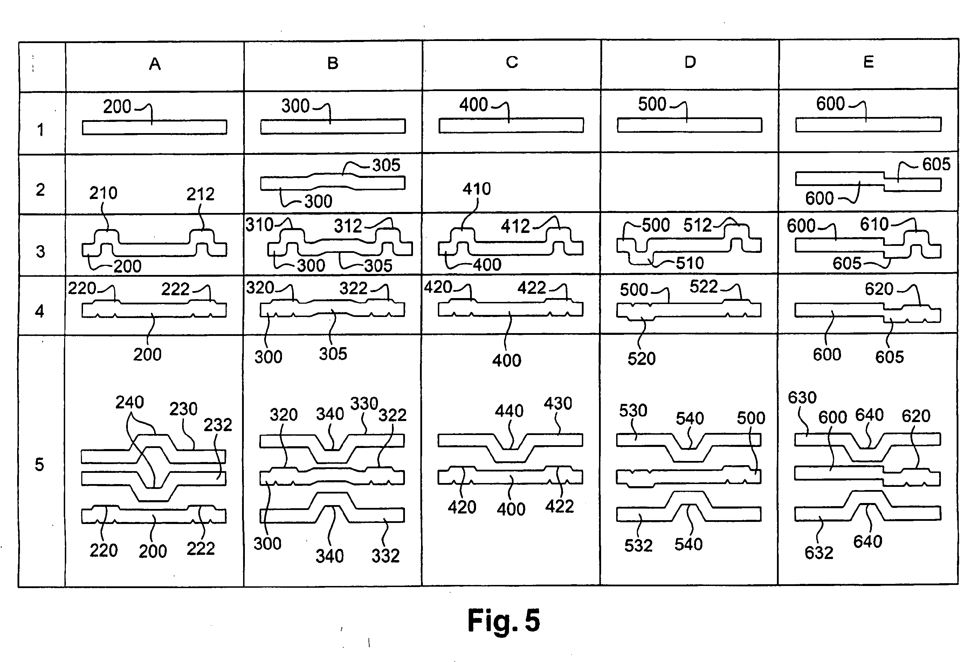

Sur la figure 5, on a représenté différentes variantes.

Dans la colonne A, une tôle 200 subit une opération de nervurage de manière à obtenir deux nervures 210 et 212 et une opération de calibrage de manière à transformer lesdites nervures en zones de surépaisseur 220 et 222.

Selon cette variante, le joint comprend en plus de la tôle 200 deux tôles 230 et 232 portant des nervures 240 orientées vers l'extérieur, l'une des nervures 240 étant susceptible de prendre appui contre la face de la tôle 200 portant les zones de surépaisseur 220 et 222, entre lesdites zones.

La variante de la colonne B comprend une tôle intercalaire 300 avec un déport 305 obtenu par estampage. La tôle intercalaire 300 subit une opération de nervurage de manière à obtenir deux nervures 310 et 312, de part et d'autre du déport 305 et une opération de calibrage de manière à transformer lesdites nervures en zones de surépaisseur 320 et 322.

La tôle intercalaire 300 est disposée entre deux tôles extérieures 330 et 332 comprenant chacune une nervure 340 susceptible de prendre appui contre la tôle intercalaire 300 au droit du déport 305

La variante de la colonne C reprend un agencement proche de celle de la colonne A, les éléments identiques portant les mêmes références augmentées de 200, avec une seule tôle 430.

La variante illustrée à la colonne D comprend une tôle intercalaire 500 à laquelle on a fait subir une opération de nervurage de manière à obtenir deux nervures 510 et 512 orientées en opposition et une opération de calibrage de manière à transformer les nervures en zones de surépaisseur 520 et 522. La tôle intercalaire 500 est disposée entre deux tôles extérieures 530 et 532 comprenant chacune une nervure 540 susceptible de prendre appui contre ladite tôle intercalaire 500.

La variante de la colonne E comprend une tôle intercalaire 600 avec un déport 605 obtenu par estampage. Cette tôle 600 subit une opération de nervurage de manière à obtenir une nervure 610 au droit du déport 605 et une opération de calibrage de manière à transformer la nervure 610 en zone de surépaisseur 620. La tôle intercalaire 600 est disposée entre deux tôles extérieures 630 et 632 comprenant chacune une nervure 640 susceptible de prendre appui contre ladite tôle intercalaire 600.

En variante, des zones de surépaisseurs peuvent être prévues indifféremment sur une ou toutes les tôles formant le joint de culasse.

Bien entendu, l'invention n'est évidemment pas limitée au mode de réalisation représenté et décrit ci-dessus, mais en couvre au contraire toutes les variantes, notamment en ce qui concerne les formes, dimensions et matériaux des différents éléments, sans sortir du cadre de l'invention telle que définie dans les revendications.

Enfin, cette tôle à surépaisseur localisée n'est pas limitée à l'application décrite et peut convenir à tous les types de joints métalliques nécessitant une surépaisseur au niveau d'une tôle.

## Revendications

1. Procédé d'obtention d'une surépaisseur au niveau de la face d'une tôle (30) susceptible d'être incorporée dans un joint, **caractérisé en ce qu'**il consiste à réaliser une opération de nervurage consistant à déformer ladite tôle (30) afin de former au moins une nervure (34) et une opération de calibrage consistant à aplatir ladite nervure (34) de manière à former une zone de surépaisseur (36).

2. Procédé selon la revendication 1, **caractérisé en ce que** la nervure (34) est calibrée avec un effort tel qu'elle forme une butée franche susceptible de résister aux contraintes que la zone de surépaisseur (36) supportera dans son application.

3. Procédé selon la revendication 1 ou 2, **caractérisé en ce que** la tôle (30) subit une opération de laminage durant la phase de nervurage de manière à obtenir, après l'opération de calibrage, une zone de surépaisseur formant une butée franche susceptible de résister aux contraintes que la zone de surépaisseur (36) supportera dans son application.

4. Procédé selon l'une quelconque des revendications précédentes, **caractérisé en ce que** la hauteur de la zone de surépaisseur (36) peut varier d'un point à un autre.

5. Procédé selon l'une quelconque des revendications précédentes, **caractérisé en ce qu'**il consiste au préalable à réaliser une opération d'estampage de manière à obtenir un déport (32).

6. Joint de culasse incorporant une tôle active et une tôle intercalaire, ladite tôle active comprenant au moins une nervure susceptible de prendre appui contre une face de la tôle intercalaire, et ladite tôle intercalaire comprenant sur cette même face au moins une zone de surépaisseur avec au moins une nervure calibrée obtenue par un étirement puis un aplatissement de la matière pour obtenir une butée franche,

7. Joint de culasse incorporant au moins deux tôles actives entre lesquelles est disposée au moins une tôle intercalaire, lesdites tôles actives comprenant chacune au moins une nervure susceptible de prendre appui contre la tôle intercalaire, et ladite tôle intercalaire comprenant sur chaque face au moins une zone de surépaisseur, chaque zone de surépaisseur comprenant au moins une nervure calibrée obtenue par un étirement puis un aplatissement de la matière pour obtenir une butée franche.

## Claims

1. Method of obtaining additional thickness on the face of a sheet (30) that can be incorporated into a gasket, **characterized in that** it involves performing a beading operation that involves deforming the said sheet (30) in such a way as to form at least one bead (34), and a sizing operation that involves flattening the said bead (34) in such a way as to form a region (36) of greater thickness.

2. Method according to Claim 1, **characterized in that** the bead (34) is sized with a force such that it forms a dead stop capable of withstanding the stresses to which the region (36) of greater thickness will be subjected in use thereof.

3. Method according to Claim 1 or 2, **characterized in that** the sheet (30) undergoes a rolling operation during the beading phase so that after the sizing operation a region of greater thickness that forms a dead stop capable of withstanding the stresses to which the region (36) of greater thickness will be subjected in use thereof is obtained.

4. Method according to any one of the preceding claims, **characterized in that** the height of the region (36) of greater thickness may vary from one point to another.

5. Method according to any one of the preceding claims, **characterized in that** it involves performing a stamping operation beforehand in order to obtain an offset (32).

6. Cylinder head gasket incorporating an active sheet and an insert sheet, the said active sheet comprising at least one bead able to bear against one face of the insert sheet, and the said insert sheet comprising on this same face at least one region of greater thickness with at least one sized bead obtained by drawing and then flattening the material in order to obtain a dead stop.

7. Cylinder head gasket incorporating at least two active sheets between which at least one insert sheet is positioned, the said active sheets each comprising at least one bead able to bear against the insert sheet and the said insert sheet comprising, on each face, at least one region of greater thickness, each region of greater thickness comprising at least one sized bead obtained by drawing and then flattening the material in order to obtain a dead stop.

## Patentansprüche

1. Verfahren zum Erhalt einer Überdicke in Höhe der Fläche eines Blechs (30), das in eine Dichtung eingebaut werden kann, **dadurch gekennzeichnet, dass** es darin besteht, einen Rippenbildungsvorgang durchzuführen, der darin besteht, das Blech (30) zu verformen, um mindestens eine Rippe (34) zu bilden, und einen Kalibrierungsvorgang durchzuführen, der darin besteht, die Rippe (34) so abzuflachen, dass eine Überdickenzone (36) geformt wird.

2. Verfahren nach Anspruch 1, **dadurch gekennzeichnet, dass** die Rippe (34) mit einer solchen Kraft kalibriert wird, dass sie einen nicht verformbaren Anschlag bildet, der den Beanspruchungen widerstehen kann, die die Überdickenzone (36) bei ihrer Nutzung erfährt.

3. Verfahren nach Anspruch 1 oder 2, **dadurch gekennzeichnet, dass** das Blech (30) während der Rippenbildungsphase einem Walzvorgang unterzogen wird, um nach dem Kalibrierungsvorgang eine Überdickenzone zu erhalten, die einen nicht verformbaren Anschlag bildet, der den Beanspruchungen widerstehen kann, die die Überdickenzone (36) bei ihrer Nutzung erfährt.

4. Verfahren nach einem der vorhergehenden Ansprüche, **dadurch gekennzeichnet, dass** die Höhe der Überdickenzone (36) von einem Punkt zu einem anderen variieren kann.

5. Verfahren nach einem der vorhergehenden Ansprüche, **dadurch gekennzeichnet, dass** es vorab darin besteht, einen Vorgang des Prägens durchzuführen, um einen Versatz (32) zu erhalten.

6. Zylinderkopfdichtung, die ein aktives Blech und ein Zwischenblech umfasst, wobei das aktive Blech mindestens eine Rippe aufweist, die gegen eine Fläche des Zwischenblechs in Anlage kommen kann, und das Zwischenblech auf dieser gleichen Fläche mindestens eine Überdickenzone mit mindestens einer kalibrierten Rippe aufweist, die durch ein Ziehen und dann Abflachen des Materials erhalten wird, um einen nicht verformbaren Anschlag zu erhalten.

7. Zylinderkopfdichtung, die mindestens zwei aktive Bleche umfasst, zwischen denen mindestens ein Zwischenblech angeordnet ist, wobei die aktiven Bleche je mindestens eine Rippe aufweisen, die gegen das Zwischenblech in Anlage kommen kann, und das Zwischenblech auf jeder Fläche mindestens eine Überdickenzone aufweist, wobei jede Überdickenzone mindestens eine kalibrierte Rippe aufweist, die durch ein Ziehen und dann Abflachen des Materials erhalten wird, um einen nicht verformbaren Anschlag zu erhalten.
